# EUROPÄISCHE PATENTANMELDUNG

(11) **EP 1 245 983 A2**
(43) Veröffentlichungstag der Anmeldung: **02.10.2002**
(21) Anmeldenummer: 02006747.6
(22) Anmeldetag: 23.03.2002
(51) Int. Cl.: G02B 7/02

(54) **Vorrichtung zur Justierung von Einrichtungen und zum Einstellen von Verstellwegen**

(30) Priorität: 30.03.2001 DE 10115915
(71) Anmelder: CARL ZEISS SEMICONDUCTOR MANUFACTURING TECHNOLOGIES AG, 73447 Oberkochen (DE)
(72) Erfinder: Klein, Klaus-Dieter, 89551 Königsbronn (DE); Petasch, Thomas, 73431 Aalen (DE); Muenker, Hartmut, 73431 Aalen (DE)
(74) Vertreter: Lorenz, Werner, Dr.-Ing.

(57) **Zusammenfassung**

Eine Vorrichtung zur Justierung von Einrichtungen und zum Einstellen von Verstellungen, insbesondere in einem nm-Bereich und darunter, insbesondere von optischen Elementen (5) in der Halbleiter-Lithographie, mit einem Basisteil (2) und einem mit Abstand davon angeordneten Kopfteil (3), wobei beide Teile durch wenigstens eine Justiereinrichtung (8) miteinander verbunden sind und wobei die Justiereinrichtung (8) Seitenteile (10,11) aufweist, deren Winkel oder Abstand zueinander durch eine Längenverstelleinrichtung (17,28) verstell- oder einstellbar ist.

## Beschreibung

Die Erfindung betrifft eine Vorrichtung zur Justierung von Einrichtungen und zum Einstellen von Verstellwegen, insbesondere in einem Mikrometer-Bereich und darunter, insbesondere von optischen Elementen in der Halbleiter-Lithographie.

In der Optik, insbesondere in Mikrolithographie ist es erforderlich z.B. in Projektionsbelichtungsanlagen angeordnete Einrichtungen sehr präzise zueinander zu justieren. Außerdem sind Einstell- und Verstellwege vorzunehmen, die sich im Mikrometer-Bereich und im Nanometer-Bereich befinden. Auch Temperaturerhöhungen oder ein Ausgleich von Temperaturdifferenzen erfordern hoch präzise Verstellungen.

Zum allgemeinen Stand der Technik wird auf die DE 37 40 515 A1, die EP 0 471 362 B1 und die DE 42 36 355 A1 verwiesen, die verschiedene Justiereinrichtungen offenbaren, z.B. piezokeramische Elemente als Aktuatoren zur Temperaturkompensation.

Aus der DE 36 15 930 A1 ist die Verwendung von Piezoscheiben bekannt, um Spiegelbewegungen zur Einstellung der Weglänge in einem Ring-Lasergyroskop zu erreichen. Die Piezoscheiben sind dabei zwischen konischen Elementen gespannt, um eine mechanische Verstärkung zu ergeben.

Der vorliegenden Erfindung liegt die Aufgabe zugrunde, eine Vorrichtung der eingangs erwähnten Art zu schaffen, durch die mit sehr hoher Genauigkeit Justierungen von einzelnen Elementen zueinander und sehr feinfühlige Verstellwege zum Einstellen möglich werden.

Erfindungsgemäß wird die Aufgabe durch die in Anspruch 1 genannten Merkmale gelöst.

Durch die erfindungsgemäße Ausgestaltung der Justiereinrichtung wird eine sehr feinfühlige Einstellung und Verstellung erreicht. Über das Querteil wird eine Höhen- bzw. Längenanpassung geschaffen, durch die - in Abhängigkeit von den Öffnungswinkeln des Trapezes bzw. Parallelogramms - entsprechend übersetzte Höhen- bzw. Längenänderungen auftreten.

In einer sehr vorteilhaften Weiterbildung der Erfindung kann vorgesehen sein, daß die Längenverstelleinrichtung mit einem Temperaturausgleichsglied versehen ist.

Durch das Temperaturausgleichsglied können unterschiedliche Temperaturausdehnungskoeffizienten der gesamten Vorrichtung berücksichtigt werden, wozu z.B. ein oder mehrere Dehnklötze vorgesehen werden können, die den Längenänderungen der Vorrichtung bei Temperaturerhöhung entgegen wirken. Im Optimalfall kann auf diese Weise eine vollständige Temperaturkompensierung erreicht werden.

In einer weiteren sehr vorteilhaften Ausgestaltung der Erfindung kann vorgesehen sein, daß zusätzlich eine Feinjustiereinrichtung vorgesehen ist, z.B. mit wenigstens zwei wenigstens annähernd parallel zueinander angeordneten Schenkeln versehen ist, deren Abstand zueinander durch ein Feineinstellglied veränderbar ist. In diesem Fall dienen z.B. zwei parallel zur Verschieberichtung angeordnete Schenkel, welche ebenfalls durch einen Querträger entweder aufgeweitet oder einander angenähert werden, dazu ebenfalls Längenänderungen einzustellen, die bezüglich ihrer Feinfühligkeit noch deutlich höher sind als die Verstelleinrichtung über die doppeltrapezartigen bzw. parallelogrammartig angeordneten Seitenteile.

Aus Gründen der Stabilität und auch unter Berücksichtigung, daß nur Höhen bzw. Längenänderungen vorgenommen werden, die sich in einem sehr kleinen Bereich abspielen, z.B. in einem nm-Bereich oder Mikrometer-Bereich, kann man für die erforderlichen beweglichen Teile für die Längenänderungen Festkörpergelenke vorsehen.

Als Einstell- bzw. Verstellglieder lassen sich mechanische, elektrische oder hydraulische Einrichtungen vorsehen.

Weitere vorteilhafte Ausgestaltungen und Weiterbildungen der Erfindungen ergeben sich aus den nachfolgend anhand der Zeichnung prinzipmäßig beschriebenen Ausführungsbeispielen.

Es zeigt:
- Figur 1: eine Seitenansicht, teilweise im Schnitt, einer erfindungsgemäßen Ausgestaltung;
- Figur 2: einen Schnitt nach der Linie II-II der Figur 1;
- Figur 3: eine Integration einer Feinjustiereinrichtung in einer Grobjustiereinrichtung;
- Figur 4: eine ähnliche Ausgestaltung wie Figur 3, ebenfalls mit einer Integration einer Feinjustiereinrichtung in eine Grobjustiereinrichtung;
- Figur 5 und 6: eine Kombination von vier miteinander verbundenen Justiervorrichtungen;
- Figur 7: eine rotationssymmetrisch aufgebaute Justiervorrichtung;
- Figur 8: eine Kombination einer rotationssymmetrisch aufgebauten Justiervorrichtung mit drei weiteren Justiervorrichtungen;
- Figur 9 und 10: eine Justiervorrichtung in Scheibenform;
- Figur 11: eine Justiervorrichtung mit einer hydraulischen Betätigungseinrichtung;
- Figur 12: eine Kombination verschiedener Justiervorrichtungen;
- Figur 13: eine Justiervorrichtung mit einer elektrischen Verstelleinrichtung;
- Figur 14: eine Justiervorrichtung mit einer hydraulischen Verstellung als Linsenabstandsring;
- Figur 15: eine Vorrichtung zur Temperaturkompensation an einem Aluminium-Profil;
- Figur 16: eine weitere Ausgestaltung einer Temperaturausgleichsvorrichtung an einem Aluminium-Profil mit künstlich verlängertem Temperaturausgleichsglied;
- Figur 17: eine Temperaturausgleichsvorrichtung an einem Aluminium-Profil mit Festkörpergelenken, und
- Figur 18: eine Aneinanderfügung von verschiedenen Profilen mit Temperaturausgleichsvorrichtungen.

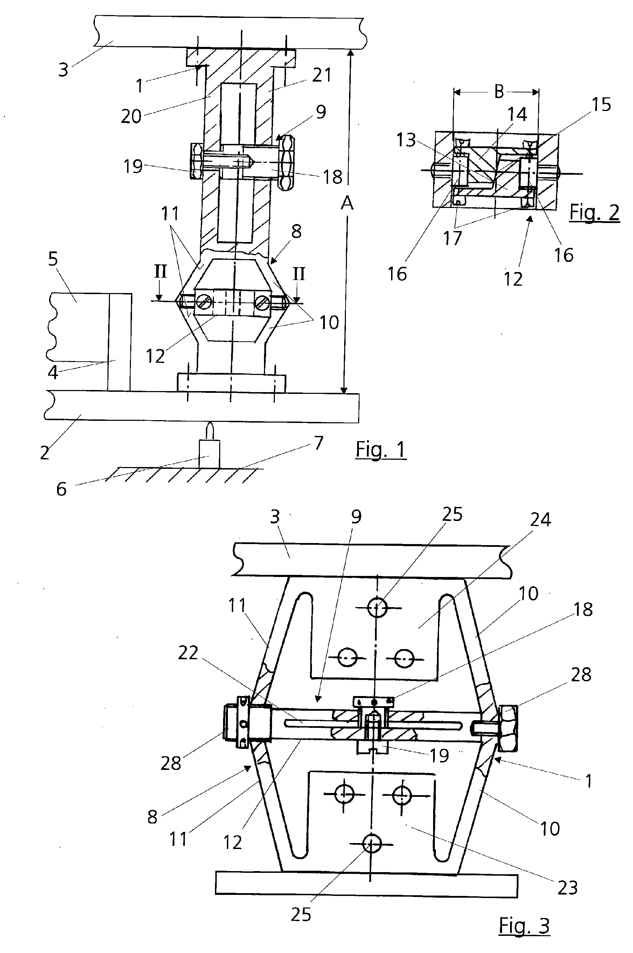

In den Figuren 1 und 2 ist eine erste Ausführungsform der erfindungsgemäßen Vorrichtung prinzipmäßig dargestellt. Eine Justiervorrichtung 1 ist zwischen einer Grundplatte 2 als Basisteil und einer Struktur 3 als Kopfteil angeordnet. Die Grundplatte 2 kann z.B. aus Keramik oder einem ähnlichen Material bestehen und als Auflage für eine Fassung 4 eines optischen Elementes 5, wie z.B. Spiegel oder Linse, dienen.

Die Struktur 3 kann z.B. ein Objektivgehäuse darstellen.

Über eine nicht näher dargestellte Vorjustiereinrichtung 6, die auf einer Meßplatte bzw. Basisplatte 7 angeordnet ist, erfolgt eine Vorjustage, z.B. bis auf 2 µm Genauigkeit. Im allgemeinen wird die Struktur 3 steif ausgebildet sein und der Abstand A der Grundplatte 2 wird hierzu genau justiert oder im Bedarfsfall auch verstellt. Hierzu weist die Justiervorrichtung 1 eine Grobjustiereinrichtung 8 und eine Feinjustiereinrichtung 9 auf.

Die Grobjustiereinrichtung 8 weist Seitenteile 10 und 11 auf, die sich parallelogrammartig bzw. doppelt trapezförmig in einem Winkel zur Verstellrichtung gemäß Abstand A erstrecken.

Zwischen den einander gegenüberliegenden Seitenteilen 10 und 11 erstreckt sich ein Querteil 12 mit einer Längenverstelleinrichtung. Die Übersetzung der Längenänderung in Verstellrichtung richtet sich nach dem Winkel der Schrägstellung der Seitenteile 10 und 11. Dargestellt ist ein Winkel von 30° zur Verstellachse. Bei einem Winkel von 45° ergibt sich eine Übersetzung von 1:1. Je geringer der Winkel ist, desto kleiner wird das Übersetzungsverhältnis. Die Seitenteile 10 und 11 sind jeweils einstückig und bilden damit Festkörpergelenke zur Verstellung.

Das Querteil 12 dient gleichzeitig auch zur Temperaturkompensation. Auf diese Weise erfüllt die Grobjustiereinrichtung eine doppelte Funktion, einmal dient sie als Verstellmechanismus zur Längenanpassung bzw. Längenveränderung des Abstandes A und zum anderen zur Temperaturkompensation, um unterschiedliche Temperaturausdehnungskoeffizienten nach Möglichkeit weitgehend oder sogar vollständig zu kompensieren. Hierzu ist das Querteil 12 mehrteilig aufgebaut. Es weist zwei spiegelbildlich zur Längsachse angeordnete Querglieder 13 und 14 auf, die aus einem Material mit geringerem Wärmeausdehnungskoeffizienten, wie z.B. Invar, bestehen. Eine Anlagefläche 15 zwischen den beiden Quergliedern 13 und 14 verläuft durch die Längsachse und liegt schräg zu ihr.

Jeweils zwischen den Quergliedern 13 und 14 und den Seitenteilen 10 und 11 befinden sich Dehnklötze 16. Die Dehnklötze 16 sind aus einem Material mit hohem Temperaturausdehnungskoeffizienten, wie z.B. Aluminium. Über Schrauben 17 läßt sich der Abstand B zwischen den einander gegenüberliegenden Seitenteilen 10 und 11 ändern. Die Änderung des Abstandes B in positiver und in negativer Hinsicht wird dadurch erreicht, daß sich die Lagen der beiden Querglieder 13 und 14 zueinander ändern. Aufgrund einer gegenseitigen Abstimmung kann erreicht werden, daß Temperaturänderungen, die ebenfalls zu Abstandsänderungen B führen würden, kompensiert werden.

Die Feinjustiereinrichtung 9 weist eine Feineinstellschraube 18 auf mit einer auf der gegenüberliegenden Seite angeordneten Konterschraube 19. Die Justiervorrichtung 1 ist in diesem Bereich in zwei auf Abstand zueinander angordnete, parallel zur Verstellrichtung sich erstreckende Arme 20 und 21 aufgeteilt. Die Konterschraube 19 ist in eine Gewindebohrung der Verstellschraube 18 eingeschraubt. Bei einem Verstellen der Verstellschraube 18 werden deshalb die beiden in Neutralstellung parallel zueinander liegenden Arme 20 und 21 entweder nach innen oder nach außen gebogen, worin ebenfalls wie bei der Änderung der Lagen der Querglieder 13, 14 bezüglich der schrägen Anlagefläche 15 eine Änderung der Länge A geschaffen wird.

Für die Fein- und Grobverstellung sind die verschiedensten Verstellglieder bzw. Aktuatoren möglich. Nachfolgend werden hierfür beispielsweise einige Lösungen beschrieben, wobei für gleiche Teile oder für gleichwirkende Teile die gleichen Bezugszeichen verwendet werden.

Die Figur 3 zeigt eine "Verschachtelung" zwischen der Grobjustiereinrichtung 8 und der Feinjustiereinrichtung 9. Wie ersichtlich ist dabei die Feinjustiereinrichtung 9 in die Grobjustiereinrichtung 8 integriert. Die Grobjustiereinrichtung 8 ist hierzu wiederum mit dem Querteil 12 versehen, wobei in dem Querteil 12 wiederum eine Temperaturkompensation vorgesehen sein kann. Das Querteil 12 ist jedoch bei dieser Ausgestaltung durch einen Querschlitz 22 über einen weiten Bereich zweigeteilt. Auf diese Weise entstehen in gleicher Weise zwei in Neutralstellung parallel zueinander liegende Arme, entsprechend den Armen 20 und 21 von Figur 1, und eine Feinverstellung erfolgt durch ein entsprechendes Auseinanderbiegen über eine Betätigung der Verstellschraube 18.

Zur Befestigung mit anderen Teilen und zur Versteifung können Versteifungsplatten 23 und 24 mit Befestigungsbohrungen 25 vorgesehen sein.

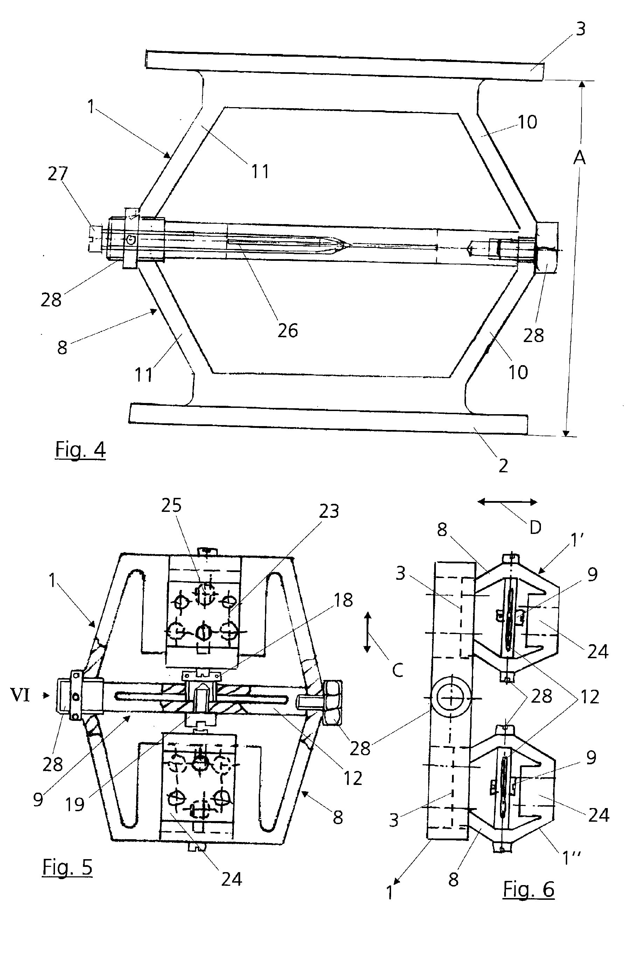

Die Figur 4 zeigt eine ähnliche Ausgestaltung wie die Figur 3, wobei die Feinjustiereinrichtung 9 direkt in die Grobjustiereinrichtung 8 integriert ist. Anstelle einer Aufspreizung der beiden Arme wie bei Figur 3 ist hier das Querteil 12 geschlitzt und mit einer Innenbohrung versehen. In die Innenbohrung ist ein Spreizdorn 26 mit einem Verstellkopf 27 zur Feinverstellung eingesetzt. Wird der Kopf 27 entsprechend verdreht, so spreizt der Spreizdorn 26 die beiden Arme entsprechend auseinander und führt damit zu einer Längenänderung des Querteiles 12 und damit aufgrund der Parallelogrammform auch zu einer Abstandsänderung A. Die Grobverstellung erfolgt durch seitlich angreifende Verstellschrauben 28, die in Gewindebohrungen des Querteiles 12 mehr oder weniger weit zur Längenänderung eingeschraubt werden.

Die Figuren 5 und 6 zeigen drei miteinander "verschachtelte" Justiervorrichtungen, und zwar in Ausgestaltungen wie sie in den Figuren 1 bis 4 besprochen worden sind. Durch diese Ausgestaltung lassen sich sowohl Justierungen bzw. Feinverstellungen in axialer Richtung als auch in lateraler Richtung durchführen oder - ganz allgemein ausgedrückt - Justierungen und Verstellungen in zwei senkrecht zueinander liegenden Ebenen. Figur 5 zeigt praktisch die Ausgestaltung nach dem Ausführungsbeispiel gemäß Figur 3. An den Versteifungsplatten 24 und 25 sind zusätzlich zwei weitere Justiervorrichtungen 1' und 1'' befestigt, z.B. angeschraubt. Die Figur 6 zeigt dabei die Ansicht der Figur 5 aus Pfeilrichtung VI. Die beiden Justiervorrichtungen 1' und 1'' sind dabei über ihre Struktur 3 jeweils mit den Versteifungsplatten 24 und 25 verbunden. Auch die beiden Justiervorrichtungen 1' und 1'' sind von gleichem Aufbau wie die Justiervorrichtung nach der Figur 3, wobei lediglich als einziger Unterschied nur eine Versteifungs- bzw. Befestigungsplatte 24 vorgesehen ist. Dies bedeutet, sie besitzen jeweils eine Grobjustiereinrichtung 8 und eine Feinjustiereinrichtung 9.

Aus Figur 5 ist ersichtlich, daß Verstellungen sich in Pfeilrichtung C auswirken, während Verstellungen der beiden Justiervorrichtungen 1' und 1'' in Verstellungen gemäß Pfeil D resultieren, wobei diese Verstellung senkrecht zur Verstellung gemäß Pfeil C liegt. Durch unterschiedliche Betätigungen der Justiereinrichtungen 1' und 1'' lassen sich auch noch Schrägstellungen bzw. Kippungen einstellen.

Die drei Justiervorrichtungen gemäß den Figuren 5 und 6 können jeweils auch noch mit Temperaturkompensiereinrichtungen, wie in der Figur 1 beschrieben, versehen sein. Im Bedarfsfall können die drei Justiervorrichtungen auch aus einem Stück gefertigt sein.

Die bisher beschriebenen Justiervorrichtungen besitzen eine Steifigkeit der Gestalt, daß eine Vorzugsrichtung gegeben ist.

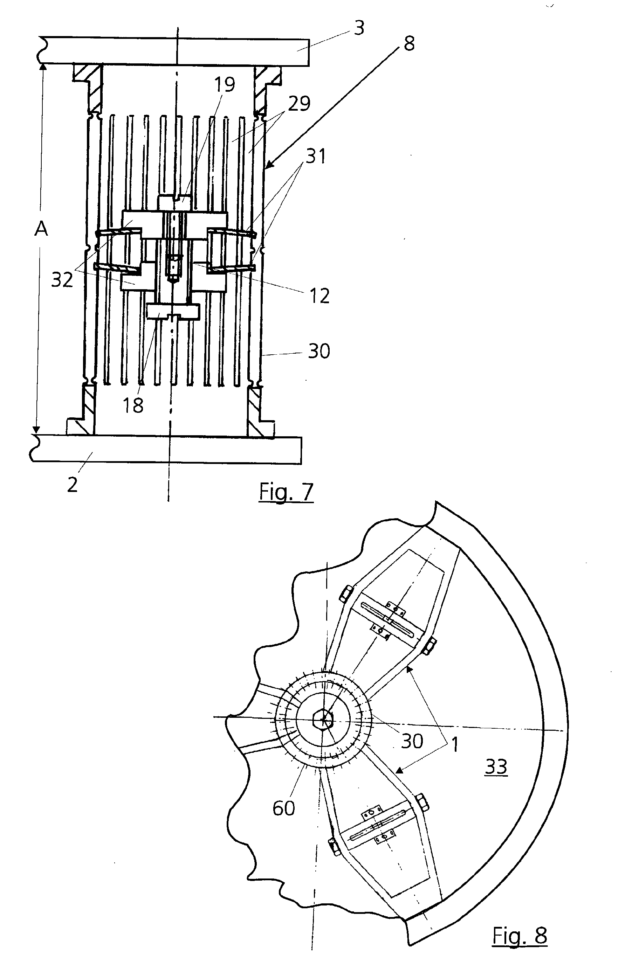

In der Figur 7 ist eine Justiervorrichtung dargestellt, die rotationssymmetrisch aufgebaut ist und deshalb eine große Steifigkeit besitzt. In diesem Fall werden geschlitzte Stäbe 29 eines Rohres 30, das zwischen die Struktur 3 und das Basisteil 2 eingesetzt ist, verwendet. Die Justiereinrichtung 8 wird durch kegelförmige Ringspannelemente 31 und zwei Druckstücke 32, z.B. aus Aluminium, gebildet, die die Ringspannelemente 31, welche auf Abstand zueinander liegen, außenseitig umfassen. Das Querteil 12 verbindet die beiden Druckstücke 32 über die Verstellschraube 18 und die Konterschraube 19 miteinander. Bei einer entsprechenden Betätigung der Verstellschraube 18 drücken die Ringspannelemente 31 die Stäbe 29 des Rohres 30 entsprechend symmetrisch nach außen, wodurch eine Gesamtlängenänderung A erreicht wird. Die beiden Ringspannelemente 31 können jeweils aus einem flachkegligen Ring aus gehärtetem Spezialfederstahl bestehen. Die axial ausgeübte Betätigungskraft bewirkt eine elastische Veränderung des Kegelwinkels und damit der Durchmesser der Ringspannelemente 31. Ist dabei der Innendurchmesser auf einem Dorn abgestützt, vergrößert sich der Außendurchmesser, ist dagegen der Außendurchmesser des Ringspannelementes 31 abgestützt, verkleinert sich der Außendurchmesser. In dem dargestellten Ausführungsbeispiel wird innen abgestützt, weshalb sich der Außendurchmesser vergrößert und auf diese Weise die Stäbe 29 nach außen aufgeweitet werden mit einer daraus resultierenden Verkürzung des Abstandes A. Auch in diesem Falle kann die Justiervorrichtung temperaturkompensiert aufgebaut werden.

Figur 8 zeigt die Kombination der Ausführungsform nach der Figur 7 mit drei Justiervorrichtungen gemäß Figur 3. Die Justiervorrichtungen 1, welche jeweils eine Grobjustiereinrichtung 8 mit einer integrierten Feinjustiereinrichtung 9 aufweisen, liegen dabei bezüglich ihrer Wirkung senkrecht zu der zentral angeordneten rotationssymmetrischen Justiervorrichtung gemäß Figur 7. Dies bedeutet, die Justiervorrichtungen 1 erstrecken sich radial bzw. speichenförmig von der Umfangswand des Rohres 30 nach außen. Die Radialanordnung der Justiervorrichtungen 1 an dem Rohr richtet sich nach dem Anwendungsfall. Eine Anordnung kann im oberen Bereich, im unteren Bereich und auch mittig - bezogen auf die axiale Länge des Rohres 30 - sein. Diese kombinierte Justiervorrichtung kann z.B. für einen Spiegel 33 vorgesehen sein, wobei die Justiervorrichtungen 1 an der Umfangswand des Spiegels 33 angreifen, während die koaxial angeordnete Justiereinrichtung gemäß Figur 7 in axialer Richtung des Spiegels 33 wirkt.

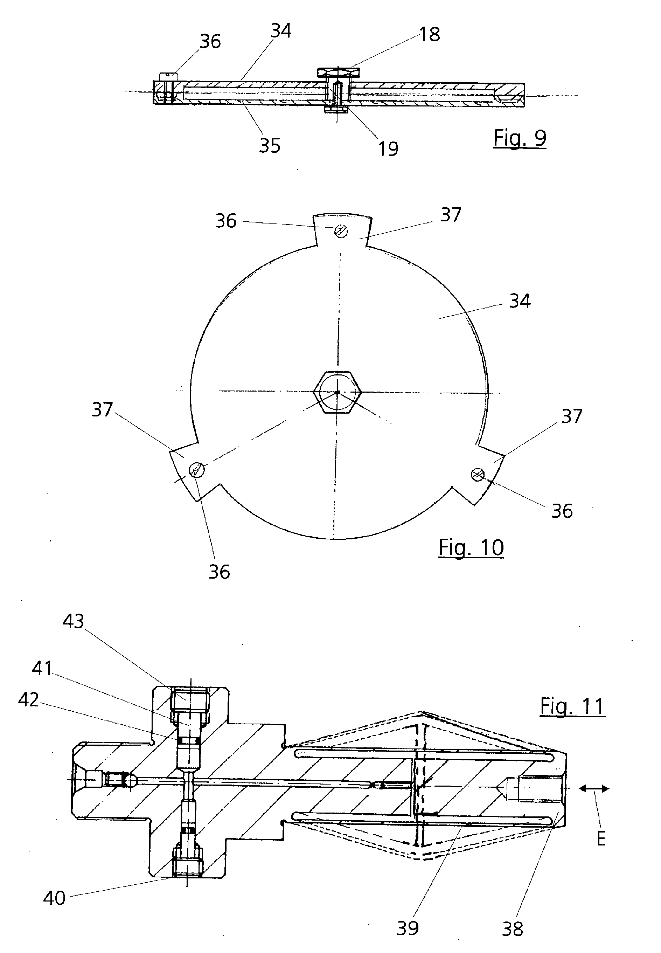

Figur 9 und Figur 10 zeigen eine Justiervorrichtung bzw. Verstellmöglichkeit zum Verstellen eines Durchmessers. Wie ersichtlich, werden dabei zwei Scheiben 34 und 35 am Umfang spielfrei durch Schrauben 36 miteinander verbunden. Wie aus der Figur 10 ersichtlich ist, können beispielsweise drei Schrauben 36 vorgesehen sein, die in entsprechenden radialen Erweiterungen 37 der Scheiben angeordnet sind.

Als Feinjustiereinrichtung 9 können zwischen die beiden Scheiben 34 und 35 wiederum eine Verstellschraube 18 mit einer gegenüberliegend angeordneten Konterschraube 19 vorgesehen sein. Durch eine entsprechende Verstellung der Verstellschraube 18 wird der Abstand der beiden Scheiben 34 und 35 zueinander verändert, womit sich eine Durchmesserverstellung im nm-Bereich ergibt. Auch hier kann eine Temperaturkompensation vorgesehen sein, ebenso wie auch eine Grobeinstelleinrichtung 8, entsprechend den in der Figur 1 dargestelltem Ausführungsbeispiel mit entsprechend angeordneten parallelogrammartigen Seitenteilen zwischen den beiden Scheiben 34 und 35. Eine derartige Ausführungsform kann z.B. zur gezielten Deformation eines Zerodurspiegels verwendet werden.

Die vorstehend beschriebenen Ausführungsbeispiele beziehen sich auf mechanische Verstellglieder.

In der Figur 11 ist eine Justiervorrichtung dargestellt, die ein hydraulisches Spreizprinzip besitzt. Wie ersichtlich fungiert dabei die Justiervorrichtung im Sinne eines hydraulischen Spanndornes nach dem Dehn-Spreizprinzip. In diesem Fall muß ein Grunddorn 38, der als Träger für eine aus einem hochwertigen Edelstahl gefertigte Dehnhülse 39 dient, im Bereich der Dehnhülse 39 aufgetrennt werden. Der hydraulische Spanndorn ist mit einem Einstellkolben 40, einem Druckkolben 41, einer Abdichtung 42 für das Hydrauliksystem und einem Druckkolben 43 versehen.

Durch eine Druckbeaufschlagung des vollständig mit Hydrauliköl befülltem Kammersystemes mittels dem Druckkolben 41/43 weitet sich die Dehnhülse 39. Bei entsprechender Druckerhöhung dehnt sich die Dehnhülse 39 ballonförmig auf (siehe gestrichelte Darstellung), wodurch sich die Gesamtlänge im Nanometerbereich gemäß Pfeil E ändert.

Für eine Feinverstelleinrichtung 9 werden die Wände der Dehnhülse 39 parallel bzw. koaxial zu dem Grunddorn 38 verlaufen. Falls eine Grobverstelleinrichtung 9 gewünscht wird, wird man eine entsprechende Parallelogrammform - wie gestrichelt dargestellt - vorwählen und dann die Wände des Parallelogramms noch weiter aufdehnen.

Durch eine Verschachtelung der Justiervorrichtungen lassen sich Verstellbewegungen in fast alle Richtungen erzeugen. Im Verbund mit Rechteck, Quadrat, Dreieck usw. sind auch Kippungen in sehr kleinen Hüben und Genauigkeiten machbar. Die dargestellten Justiervorrichtungen können praktisch auch in jedem Spreizschenkel nochmals verschachtelt werden, so daß bei einer normalen Justiervorrichtung zusätzlich auch noch hoch genaue Kippbewegungen ausgeführt werden können.

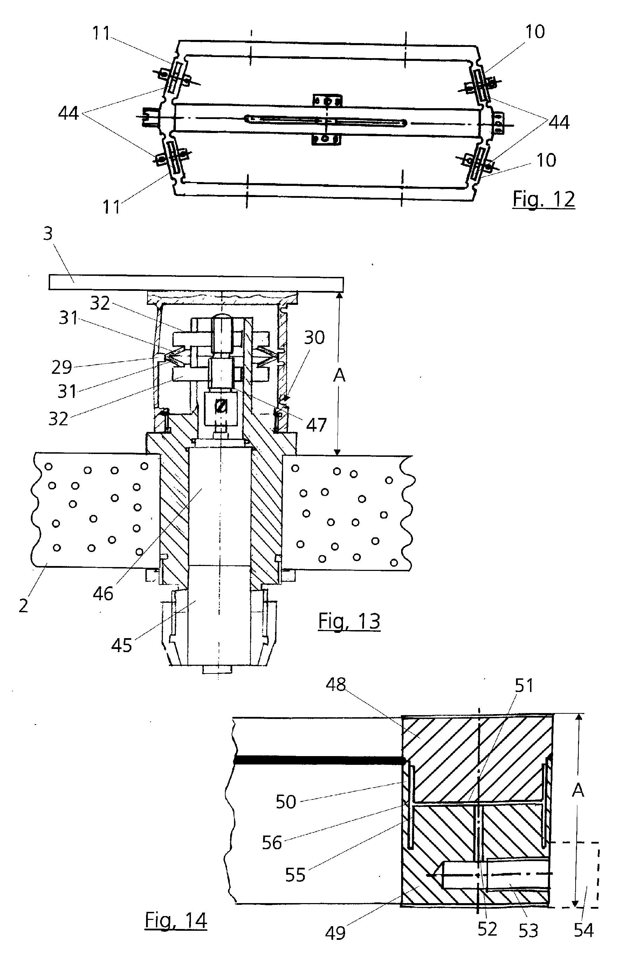

Eine derartige Ausgestaltung ist in der Figur 12 prinzipmäßig dargestellt. Wie ersichtlich, sind dabei in den Seitenarmen 10 und 11 jeweils- weitere Justiervorrichtungen integriert. Hierzu sind die Seitenarme 10 und 11 jeweils zweiarmig mit zwei Schenkeln ausgebildet bzw. besitzen entsprechend große Schlitze 44 in ihrem Inneren. Die übergeordnete Justiervorrichtung besitzt einen gleichen Aufbau wie das Ausführungsbeispiel nach der Figur 3 (ohne Versteifungsplatten).

In der Figur 13 ist eine Justiervorrichtung dargestellt, wobei die Verstellung auf elektrische Weise erfolgt. Die Änderung des Abstandes A erfolgt dabei mechanisch durch eine Spannhülse gemäß Ausführungsbeispiel nach der Figur 7 mit einem Rohr 30, das durch Schlitze eine Vielzahl von Stäben 29 aufweist. In gleicher Weise sind Ringspannelemente 31 vorhanden. Gleiches gilt für die Druckstücke 32. Zum Aufspreizen mit entsprechenden Durchmesseränderungen der Ringspannelemente 31 dient nun ein Motor 45 mit einem angeflanschten Getriebe 46. An die Getriebeabtriebswelle wird eine Gewindespindel 47 mit Rechts- und Linksgewinde gekoppelt. Über die beiden Spindelgewinde werden nun die Druckstücke 32 bezüglich ihrer Position zueinander geändert, womit sich auch die Ringspannelemente 31 in ihrem Durchmesser ändern und damit den Längenänderungseffekt bezüglich der Länge A durch ein entsprechendes Aufspreizen der Stäbe 29 erreichen.

Die Figur 14 zeigt eine Justiervorrichtung mit einer hydraulischen Verstellung bzw. einem hydraulischen Aktuator. Grundsätzlich ist dabei der Aufbau ähnlich dem Aufbau nach der Figur 11. Der in dieser Figur dargestellte hydraulische Aktuator kann sehr klein und vor allen Dingen ringförmig ausgebaut sein. Dies bedeutet, die Ringe können z.B. als Linsenabstandsringe benutzt werden. Dabei kann der Linsenabstand von außen statisch oder dynamisch verändert werden, ohne die Linsen auszubauen. Auf diese Weise können die Linsen nach dem montierten Zustand noch von außen nachjustiert werden und zwar ohne daß sie nochmals ausgebaut werden müssen. Neben einer hohen Zeitersparnis wird auf diese Weise vermieden, daß die Linsen nach einer Demontage kontaminiert und dann entsprechend gereinigt werden müssen.

Wie ersichtlich, können z.B. hierzu ein oberer Ring 48 und ein unterer Ring 49 vorgesehen sein, die zusammen einen Linsenzwischenring darstellen. Der Ring 49 umfaßt mit geringem Abstand mit einer hülsenartigen Erweiterung 50 den oberen Ring 48. Das Ende der hülsenartigen Erweiterung 50 kann z.B. durch Löten oder Verschweißen mit dem oberen Ring 48 verbunden werden. Stirnseitig liegen die beiden Ringe 48 und 49 mit geringem Abstand unter Bildung eines Zwischenraumes 51 übereinander. Der Zwischenraum 51 ist über eine zentrale Bohrung 52 mit einer Zufuhrleitung 53 versehen, die in nicht näher dargestellter Weise mit einer Hydraulikeinrichtung 54 (gestrichelte Darstellung) verbunden ist. Zur Änderung des Abstandes A und damit zur Höhenänderung des Linsenzwischenringes wird über die nicht näher dargestellte Hydraulikeinrichtung 54 Flüssigkeit unter Druck über die Bohrung 52 in den Zwischenraum 51 und den Ringraum 55 zwischen der hülsenartigen Erweiterung 50 und den Umfangswänden der Ringe 48 und 49 eingeleitet. Auf diese Weise entsteht - im Querschnitt gesehen - ein H-förmiger Druckraum. Wenn die hülsenartige Erweiterung 50 entsprechend dünnwandig ist und gegebenenfalls noch mit einer Ringnut oder Einstichen 56 in der Umfangswand versehen ist, so beult sich die hülsenartige Erweiterung 50 bei einer entsprechenden Druckbeaufschlagung nach außen auf und führt damit zu einer Reduzierung des Abstandes A.

Bei hochempfindlichen Strukturen ist es auch denkbar, stranggepreßte Aluminiumprofile zu entwickeln, die auf dem in der Figur 1 genannten Prinzip temperaturkompensiert sind. Aluminium ist bekanntlich in der Temperaturausdehnung ein sehr schlechtes Material. Andererseits ist es relativ billig und sehr gut zu verarbeiten und durch ein Strangpressen einfach herstellbar.

Bei einer richtigen Dimensionierung mit einer Temperaturausgleichseinrichtung kann erreicht werden, daß sich das Profil in einer Richtung bei einer Temperaturänderung nicht ändert. Die Profile können dabei verschraubt, verschweißt oder auf andere Weise zu kompliziertesten Kombinationen miteinander verschachtelt werden. Im Bedarfsfall können sogar in Rohrstrukturen Formteile erodiert oder gefräst werden.

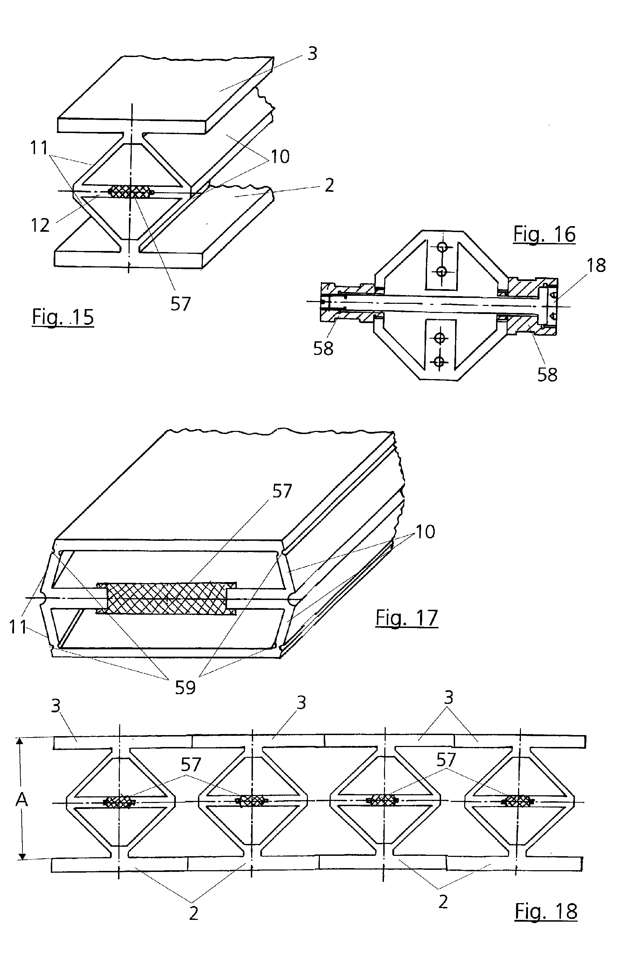

In den Figuren 15 bis 18 sind prinzipmäßig hierzu verschiedene Ausführungsmöglichkeiten dargestellt. Die Oberseiten und Unterseiten des Aluminiumprofiles stellen dabei die gleichen Teile dar wie die Struktur 3 und das Basisteil 2. Auch im dazwischenliegenden Bereich entspricht die Grundidee der Ausgestaltung nach der Figur 1 mit der Grobeinstelleinrichtung 8, verbunden mit einer Temperaturkompensation. Dies bedeutet, es sind in gleicher Weise Seitenteile 10 und 11 vorhanden und ein Querteil 12. In dem Querteil 12 ist nun ein Temperaturausgleichsteil 57 integriert, das einen Temperaturausdehnungskoeffizienten aufweist, welcher wesentlich niedriger ist als der von Aluminium. Durch eine entsprechende Materialauswahl und Dimensionierung der Teile kann auf diese Weise erreicht werden, daß sich der Abstand des Basisteiles 2 von der Struktur 3 nicht ändert. Als Temperaturausgleichsteil 57 kann z.B. Kunststoff verwendet werden.

Die Figur 16 zeigt eine Ausgestaltung entsprechend dem Ausführungsbeispiel nach der Figur 3, wobei in diesem Fall als Grundwerkstoff Aluminium verwendet wird. Weiterhin ist noch eine Verstelleinrichtung durch die Verstellschraube 18 vorgesehen. Auch eine Feinverstellung kann in das Querteil 12 integriert werden. Zusätzlich kann sich das Querteil 12 auch noch in Stützringen 58 und 59 abstützen, die ebenfalls aus einem Werkstoff mit niedrigem Temperaturausdehnungskoeffizienten, wie z.B. Invar, bestehen.

Die Figur 17 zeigt eine Ausgestaltung, bei der die beiden Seitenteile 10 und 11 jeweils mit Abstand voneinander über Festkörpergelenke 59 mit der Struktur 3 bzw. dem Basisteil 2 verbunden sind. Auch hier ist für einen Temperaturausgleich das Querteil 12 aus zwei unterschiedlichen Materialien gebildet, nämlich zum einen aus dem Aluminiumwerkstoff (wie die übrigen Teile des Profiles) und aus dem Temperaturausgleichsteil 57 mit niedrigeren Wärmeausdehnungskoeffizienten.

Durch ein Aneinanderfügen von verschiedenen Profilen gemäß Figuren 15 und 17 oder durch Erodieren, Fräsen und dergleichen lassen sich in Strukturen alle möglichen Kompensationselemente einbringen. Sogar in runden Teilen können solche Strukturen untergebracht werden. In der Figur 18 ist hierzu beispielsweise eine Aneinanderfügung von mehreren Profilen gemäß Figur 15 dargestellt.

## Patentansprüche

1. Vorrichtung zur Justierung von Einrichtungen und zum Einstellen von Verstellungen, insbesondere in einem nm-Bereich und darunter, insbesondere von optischen Elementen (5) in der Halbleiter-Lithographie, mit einem Basisteil (2) und einem mit Abstand davon angeordneten Kopfteil (3), wobei beide Teile durch wenigstens eine Justiereinrichtung (8) miteinander verbunden sind und wobei die Justiereinrichtung (8) Seitenteile (10,11) aufweist, deren Winkel oder Abstand zueinander durch eine Längenverstelleinrichtung (17,28) verstell- oder einstellbar ist.

2. Vorrichtung nach Anspruch 1, **dadurch gekennzeichnet, daß** die Längenverstelleinrichtung (17,28) ein Querteil (12), das zwischen die sich gegenüberliegenden Seitenteilen (10,11) gespannt ist, aufweist.

3. Vorrichtung nach Anspruch 2, **dadurch gekennzeichnet, daß** die Seitenteile (10,11) parallelogrammartig angeordnet sind.

4. Vorrichtung nach einem der Ansprüche 1 bis 3, **dadurch gekennzeichnet, daß** die Längenverstelleinrichtung (17,28) mit Temperaturausgleichsgliedern (16) versehen ist.

5. Vorrichtung nach Anspruch 4, **dadurch gekennzeichnet, daß** die Temperaturausgleichsglieder ein oder mehrere Dehnklötze (16) aufweisen, die Temperaturausdehnungskoeffizienten besitzen, die den Längenänderungen der Vorrichtung bei Temperaturerhöhung entgegenwirken.

6. Vorrichtung nach einem der Ansprüche 1 bis 5, **dadurch gekennzeichnet, daß** zusätzlich zu der Justiereinrichtung (8) eine Feinjustiereinrichtung (9) vorgesehen ist.

7. Vorrichtung nach Anspruch 6, **dadurch gekennzeichnet, daß** die Feinjustiereinrichtung (9) mit wenigstens zwei wenigstens annähernd parallel zueinander angeordneten Schenkeln (20,21) versehen ist, deren Abstand zueinander durch ein Feineinstellglied (18) veränderbar ist.

8. Vorrichtung nach Anspruch 6 oder 7, **dadurch gekennzeichnet, daß** die Feinjustiereinrichtung (9) in eine Grobjustiereinrichtung (8) integriert ist (Figur 3, Figur 4).

9. Vorrichtung nach einem der Ansprüche 1 bis 8, **dadurch gekennzeichnet, daß** wenigstens ein Teil, der für die Verstellung vorgesehenen Gelenke als Festkörpergelenke ausgebildet sind.

10. Vorrichtung nach einem der Ansprüche 1 bis 9, **dadurch gekennzeichnet, daß** mehrere Justiereinrichtungen (1,1',1") in verschiedenen Ebenen derart miteinander verbunden sind, daß Justierungen und Feinverstellungen in mehreren senkrecht zueinander liegenden Ebenen möglich sind (Figuren 5 und 6).

11. Vorrichtung nach Anspruch 1 oder 2, **dadurch gekennzeichnet, daß** die Justiereinrichtung (8) rotationssymmetrisch aufgebaut ist mit einem Rohr (30), das aus einer Vielzahl von geschlitzten Stäben (29) gebildet ist und das zwischen dem Basisteil (2) und dem Kopfteil (3) eingesetzt ist.

12. Vorrichtung nach Anspruch 11, **dadurch gekennzeichnet, daß** die Justiereinrichtung (8) kegelförmige Ringspannelemente (31) zur Aufweitung der geschlitzten Stäbe (29) aufweist, welche durch Druckstücke (32) betätigbar sind.

13. Vorrichtung nach Anspruch 3 und 11, **dadurch gekennzeichnet, daß** die rotationssymmetrische Justiereinrichtung (29,30) mit der Justiereinrichtung (8) mit den parallelogrammartig angeordneten Seitenteilen (10,11) kombiniert ist, wobei sich mehrere über den Umfang verteilt angeordnete Justiereinrichtungen (8) radial von dem Rohr (30) aus nach außen erstrecken (Figur 8).

14. Vorrichtung nach Anspruch 13, **dadurch gekennzeichnet, daß** die rotationssymmetrische Justiereinrichtung (29,30) und die über den Umfang verteilt angeordneten Justiereinrichtungen (8) bei einem optischen Element, insbesondere einem Spiegel, vorgesehen sind (Figur 7).

15. Vorrichtung nach Anspruch 1, **dadurch gekennzeichnet, daß** die Justiereinrichtung (8,9) mit zwei Scheiben (34,35) versehen ist, deren Abstand zueinander durch eine Feinjustiereinrichtung (9) änderbar ist (Figur 9, Figur 10).

16. Vorrichtung nach einem der Ansprüche 1 bis 15, **dadurch gekennzeichnet, daß** die Justiereinrichtung (8,9) durch eine hydraulische Betätigungseinrichtung (40,41,42,43) betätigbar ist (Figur 11).

17. Vorrichtung nach einem der Ansprüche 1 bis 15, **dadurch gekennzeichnet, daß** die Justiereinrichtung (8,9) durch eine elektrische Betätigungseinrichtung (45,46,47) betätigbar ist (Figur 13).

18. Vorrichtung nach Anspruch 10, **dadurch gekennzeichnet, daß** die hydraulische Betätigungseinrichtung bei einem Linsenabstandsring vorgesehen ist, welcher aus einem unteren Ring (49) und einem oberen Ring (48) gebildet ist, wobei durch eine hülsenartige Erweiterung (50), die einen Druckraum (Ringraum 55) bildet, eine Justiereinrichtung (8,9) gebildet ist (Figur 14).

19. Vorrichtung nach Anspruch 2, **dadurch gekennzeichnet, daß** die Temperaturausgleichseinrichtung (57) in ein Aluminium-Profil mit einem Basisteil (2) und einer Struktur (3) integriert ist (Figur 15).

20. Vorrichtung nach Anspruch 19, **dadurch gekennzeichnet, daß** das Aluminium-Profil mit einer Verstelleinrichtung (Verstellschraube 18) versehen ist (Figur 16).

21. Vorrichtung nach Anspruch 19 oder 20, **dadurch gekennzeichnet, daß** das Aluminium-Profil Seitenteile (10,11) aufweist, die mit Festkörpergelenken (59) versehen sind (Figur 17).

22. Vorrichtung nach einem der Ansprüche 19 bis 21, **dadurch gekennzeichnet, daß** mehrere Aluminium-Profile, die mit Temperaturausgleichseinrichtungen (57) versehen sind miteinander verbunden sind.
